# EUROPEAN PATENT SPECIFICATION

(11) **EP 3 470 326 B1**
(45) Date of publication and mention of the grant of the patent: **01.12.2021**
(21) Application number: 17196130.3
(22) Date of filing: 12.10.2017
(51) Int. Cl.: B64C 1/08

(54) **STRUCTURAL PANEL WITH COMPLEX FRAMEWORK**
STRUKTURPLATTE MIT KOMPLEXEM RAHMEN
PANNEAU STRUCTUREL À OSSATURE COMPLEXE

(43) Date of publication of application: 17.04.2019
(73) Proprietor: Airbus Operations GmbH, 21129 Hamburg (DE)
(72) Inventor: SOMDA, Nabankele Martial, 21129 Hamburg (DE); SCHAEFER, Bastian, 21129 Hamburg (DE)
(74) Representative: Isarpatent

(56) References cited:
- EP-A1- 2 921 600
- US-A1- 2008 272 236
- US-A1- 2010 200 697

## Description

The present invention relates to a structural panel with a complex framework, a structural aircraft component employing a complex framework formed as a structural panel, and a method for manufacturing a structural panel with a complex framework.

Beams, joists and frames for construction work, for example in aeronautics, civil engineering or architecture, are designed to withstand bending forces acting perpendicular to the direction of extension of the respective beams. Conventional beams may be implemented as an integral part with flanges at the edges and a web spanning between the flanges. Alternatively, instead of a web, cutter milled struts may be implemented between parallel running longitudinal support bars, thus leading to decreased weight of the beam due to less material being used to form the beam.

Most frameworks are optimized in design for in-plane loading, i.e. loads that act within the plane of extension of the framework. In-plane loads may for example be tension, compression and shear. However, the performance in case of out-of-plane loading, i.e. loads that act or at least have a component orthogonally to the plane of extension of the framework, is usually lackluster as compared to sandwich plate solutions due to the low out-of-plane bending and torsional stiffness. On the other hand, sandwich panels usually include top and bottom layers to take up derivate tension and compression loads. On the compression side, the layers have to be made thicker in order to compensate for buckling events. The weight penalty associated with sandwich panels is therefore doubled if bending loads may occur on both sides of the sandwich panel.

In order to save weight on board of aircraft, there have been several attempts to optimize the design of structural aircraft components. For example, document US 5,794,398 A discloses an at least partially hollow framework with nodes and members wherein the nodes are formed by at least a projection on a hollow framework member and by at least a further hollow member mounted and secured thereon. Document BE 461 586 A discloses a geodesic structure capable of supporting loads to which an aircraft framework is subjected, the geodesic structure constructed without incorporating the longitudinal members or longitudinal members and including a framework consisting essentially of two crossed series of spacer elements arranged geodetically in the surface of the construction. Document EP 2 921 600 A1 discloses a framework with a plurality of interconnection struts. Document US 2010/0200697 A1 discloses an isogrid panel having an external face sheet with integral stiffener or stringer members.

There is, however, a need for structural panels, for example to be used in aircraft, that have low weight and that at the same time are capable of withstanding in-plane loading as well as out-of-plane loading.

One object of the invention is therefore to provide solutions that decrease the amount and weight of material needed to form sufficiently strong structural panels as for example used in structural aircraft components.

This object is achieved by a structural panel having the features of claim 1, a structural aircraft component having the features of claim 8, and a method for manufacturing a structural panel having the features of claim 9.

A first aspect of the claimed invention pertains to a structural panel. The structural panel includes a space frame having an outer rectangular contour. The space frame comprises two vertically running border frame rods and two horizontally running border frame rods connecting to the two vertically running border frame rods at corner nodes of the outer rectangular contour. The space frame further comprises a plurality of equidistantly spaced horizontally running space frame rods, and a plurality of equidistantly spaced vertically running space frame rods, the horizontally and vertically running space frame rods each connecting to one of the two vertically running border frame rods and two horizontally running border frame rods at connection nodes. The space frame finally comprises a plurality of diagonally running space frame rods running between diagonally neighboring interconnection nodes of the horizontally running space frame rods or the vertically running space frame rods and extending towards the connection nodes and the corner nodes at the vertically and horizontally running border frame rods. Intracell nodes form intersections between the diagonally running space frame rods and lie within space frame cells defined by two adjacent horizontally running space frame rods and two adjacent vertically running space frame rods. The horizontally running space frame rods, the vertically running space frame rods, the vertically running border frame rods, the horizontally running border frame rods and the diagonally running space frame rods are each longitudinally extending beams with hollow cross-sections.

According to a second aspect of the claimed invention, a structural aircraft component comprises a substantially planar structural panel, the structural panel having features according to the first aspect of the claimed invention.

According to a third aspect of the claimed invention, a method for manufacturing a structural panel comprises connecting two vertically running border frame rods to two horizontally running border frame rods at corner nodes to form an outer rectangular contour of a space frame; spanning a plurality of equidistantly spaced horizontally running space frame rods between the two vertically running border frame rods; spanning a plurality of equidistantly spaced vertically running space frame rods between the two horizontally running border frame rods; and spanning a plurality of diagonally running space frame rods to run between diagonally neighboring interconnection nodes of the horizontally running space frame rods or the vertically running space frame rods and extending towards the connection nodes and the corner nodes at the vertically and horizontally running border frame rods. Intracell nodes are formed as intersections between the diagonally running space frame rods and lie within space frame cells defined by two adjacent horizontally running space frame rods and two adjacent vertically running space frame rods. The horizontally running space frame rods, the vertically running space frame rods, the vertically running border frame rods, the horizontally running border frame rods and the diagonally running space frame rods are each manufactured as longitudinally extending beams with hollow cross-sections.

The structural panel of the invention provides for a flexible, lightweight and adaptable solution for taking up out-of-plane loads such as bending and torsional moments acting on the panel. The high complexity of space frame structure employed for such structural panels has sufficient bending and torsional stiffness of its members to sustain out-of-plane loads. The structural panel of the invention advantageously provides a higher structural stability in comparison to conventional panels due to short length of beams between nodes that provide a higher resilience against compression loads. This, in turn, leads to a pre-eminent efficiency to carry out-of-plane loadings.

Weight reductions of over 30% may be achieved due to the innate stiffness of the members of the space frame structure in the structural panels of the invention. The architecture of the highly complex space frame structure may be easily adapted to the positioning of multiple load introduction points. Optimized attachments to such load introduction points may be achieved shifting nodes between space frame rods to match the positioning of the load introduction points.

Bionically designed architectures may be realized in conjunction with the space frame structure in order to specifically adapt to the prevalent loading and attachment situation for the respective structural panel. The outer frame and the features of the nodes may remain the same, but longitudinal, transversal and diagonal space frame rods may be merged at suitable locations in the overall assembly in order to optimize the load paths while maintaining the desired bending and torsional stiffness.

According to an embodiment of the structural panel, the horizontally running space frame rods and the vertically running space frame rods may intersect at the interconnection nodes.

In some of the embodiments, the cross-sectional shape of the horizontally running space frame rods, the vertically running space frame rods, the vertically running border frame rods, the horizontally running border frame rods and the diagonally running space frame rods may be quadratic or rectangular. Alternatively, the cross-sectional shape of the horizontally running space frame rods, the vertically running space frame rods, the vertically running border frame rods, the horizontally running border frame rods and the diagonally running space frame rods may be circular, oval, trapezoidal or triangular.

According to a further embodiment of the structural panel, the horizontally running space frame rods, the vertically running space frame rods, the vertically running border frame rods, the horizontally running border frame rods and the diagonally running space frame rods may be torsion stiff frame rods that have a torsional constant which is higher or equal to their area moment of inertia.

According to a further embodiment of the structural panel, the space frame may be configured to sustain out-of-plane loads.

According to a further embodiment of the structural panel, the ratio of the distance between each two adjacent horizontally running space frame rods and the distance between each two adjacent vertically running space frame rods may be in the range between 5:4 and 4:5. In a particular embodiment, this ratio may be 1:1.

According to an embodiment of the method for manufacturing a structural panel, the space frame rods of a space frame may be manufactured using an additive manufacturing process, such as for example free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP) and/or additive layer manufacturing (AM).

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a perspective view of parts of a structural panel formed by a space frame according to an embodiment of the invention.
Fig. 2 schematically illustrates a cross-sectional view through an exemplary space frame rod used in the space frame of Fig. 1 according to another embodiment of the invention.
Fig. 3 schematically illustrates a cross-sectional view through an exemplary space frame rod used in the space frame of Fig. 1 according to another embodiment of the invention.
Fig.4 schematically illustrates a block diagram for a method of manufacturing a structural panel according to another embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate implementations may be substituted for the specific embodiments shown and described without departing from the scope of the appended claims.

Generally, this application is intended to cover any adaptations or variations of the specific embodiments discussed herein.

Some of the components, elements and assemblies as disclosed hereinforth may be fabricated using free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP) and/or additive layer manufacturing (AM). Those techniques belong to a general hierarchy of additive manufacturing (AM) methods. Often termed as 3D printing, those systems are used for generating three-dimensional objects by creating a cross-sectional pattern of the object to be formed and forming the three-dimensional solid object by sequentially building up layers of material. Any of such procedures will be referred to in the following description as AM or 3D printing without loss of generality. AM or 3D printing techniques usually include selectively depositing material layer by layer, selectively fusing or solidifying the material and removing excess material, if needed.

3D or AM techniques may be used in procedures for building up three-dimensional solid objects based on digital model data. 3D/AM employs an additive process where layers of material are sequentially built up in different shapes. 3D/AM is currently used for prototyping and distributed manufacturing with multiple applications in engineering, construction, industrial design, automotive industries and aerospace industries.

Space frames within the meaning of the present disclosure may encompass any truss-like structure consisting of a plurality of construction elements organized in a geometrical assemblage in space. The construction elements are shaped in such a way that forces being applied to the assemblage act substantially only on two points of the construction elements. The construction elements may themselves have any desired shape or form, being interconnected to other construction elements at joints or nodes of the assemblage.

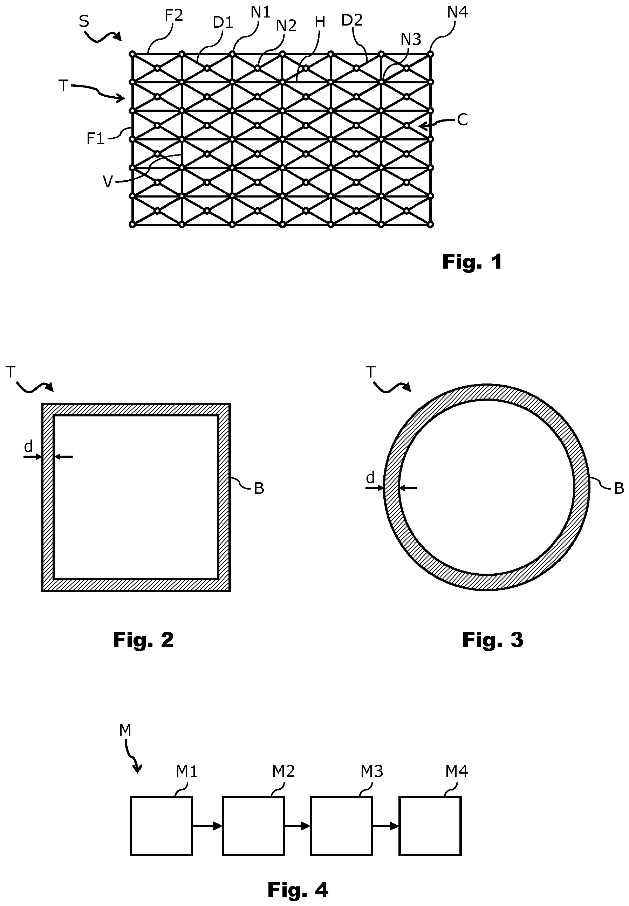

Fig. 1 shows a perspective view of parts of a space frame T that may be used to construct a substantially planar structural panel S. The structural panel S may for example be used in a structural aircraft component, such as a partition element, a fuselage element or a wingbox element of an aircraft. The space frame T may in some embodiments have a generally two-dimensional layout, i.e. a substantially planar geometry where the set of space frame rods or space frame members forming the space frame T define a common plane of extension. The space frame T may in some other embodiments have a generally three-dimensional layout, i.e. for each first plane of extension defined by a subset of space frame rods, another subset of space frame rods is connected to nodes of the former subset in a manner that defines at least one further second plane of extension being arranged under a non-zero angle with respect to the first plane of extension.

The number of space frame rods is generally not limited to any specific number, but instead their number will ultimately depend on the result of the optimization algorithm employed to find the optimal design of the space frame. Moreover, the number, kind, type and specific design of connectors for the interconnection of adjoining space frame rods at nodes N1, ..., N4 may vary depending on the particular optimized design and/or the desired maximum length of a single space frame rod.

The structural panel S of Fig. 1 may generally be built up with a space frame structure T of a plurality of space frame rods running into different directions. The particular arrangement of the space frame structure T may for example be determined by a computer-implemented design procedure that employs metaheuristic optimization algorithms for optimizing the load paths through the truss of space frame rods.

All structural members and space frame rods of the structural panel S may in particular be manufactured using an Additive Manufacturing, AM, process. The structural members and space frame rods of the structural panel S may for example be made from a suitable material accessible by the AM process. The material should preferably offer high fatigue properties and positive manufacturing propensities. In some embodiments, the structural panel S may be manufactured in parts so that smaller AM machines and systems may be used. For example, it may be possible to break down the structural topology of the space frame structure T into a number of sub-components that may be separately 3D-printed on different ALM systems. Each sub-component may contain standardized connectors of different connector types which allow for proper connection between respective sub-components to be joined at the nodes N1, ..., N4 and for adjustment of tolerances between neighbouring sub-components.

The space frame T may generally include an outer rectangular contour made up from vertically running border frame rods F1 and horizontally running border frame rods F2. The border frame rods F1 and F2 connect at corner nodes N4 of the rectangular shape of the structural panel. Within the rectangular shape spanned by the border frame rods F1 and F2, the space frame T may generally include a number or horizontally running space frame rods H which are spaced apart equidistantly between the border frame rods F2. In the same manner, the space frame T may generally include a number or vertically running space frame rods V which are spaced apart equidistantly between the border frame rods F1. At the connection nodes N1 between the horizontally running space frame rods H or the vertically running space frame rods V and the respective border frame rods F1 and F2, the space frame rods H and V may interconnect with the border frame rods F1 and F2, respectively.

The space frame T further comprises diagonally running space frame rods D1 and D2 that run between diagonally neighboring interconnection nodes N3 of the horizontally running space frame rods H or the vertically running space frame rods V and further extends towards the connection nodes N1 and the corner nodes N4 at the border frame rods F1 and F2. The intersections between the diagonally running space frame rods D1 and D2 are formed by intracell nodes N2 which lie within space frame cells C defined by two adjacent horizontally running space frame rods H and two adjacent vertically running space frame rods V, respectively, or - at the border frame - by one or two horizontally running space frame rods H, one or two vertically running space frame rod V and one or both of the border frame rods F1 and F2, respectively.

In that manner, the space frame T includes a number of interconnection nodes of which the corner nodes N4 connect to three neighboring nodes each, the intracell nodes N2 connect to four neighboring nodes each, the connection nodes N1 connect to five neighboring nodes each, and the interconnection nodes N3 connect to eight neighboring nodes each. Each of the nodes N1, ..., N4 is bending stiff and torsion stiff in order to enable the space frame to behave as a plate or a panel in all loading directions.

The frame rods H, V, F1, F2, D1 and D2 are each longitudinally extending beams with hollow cross-sections. Two exemplary configurations for cross-sections of those frame rods forming the space frame T are illustrated in Figs. 2 and 3.

As for example shown in Fig. 2, the frame rods may have an outer quadratic or rectangular wall B of wall thickness d. As for example shown in Fig. 3, the frame rods may alternatively have an outer circular wall B of wall thickness d. Of course, it may be possible to implement the frame rods with other cross-sectional shapes, for example polygonal shapes, trapezoidal shapes, oval shapes or triangular shapes. In some embodiments, it is desirable to implement torsion stiff frame rods that have a torsional constant which is higher or equal to the area moment of inertia for the frame rods.

The ratio of the distance between each two adjacent horizontally running space frame rods H and the distance between each two adjacent vertically running space frame rods V may be variable. For example, the ratio of those distances may be 1:1, leading to an angle between the diagonally running space frame rods D1, D2 and the horizontally or vertically running space frame rods H, V of 45°. For other ratios, those angles may differ as well. In specific embodiments, the deviation from an angle of 45° between the diagonally running space frame rods D1, D2 and the horizontally or vertically running space frame rods H, V may be up to +/-15°. In some embodiments, the ratio of the distance between each two adjacent horizontally running space frame rods H and the distance between each two adjacent vertically running space frame rods V may be in the range between 5:4 and 4:5.

Fig. 4 schematically illustrates stages of a manufacturing method M for a structural panel, for example the sandwich panel S as illustrated in Fig. 1 and explained in conjunction with Fig. 2 and 3. The manufacturing method M may be employed to manufacture structural panels for use in a structural aircraft component.

In a first stage M1, two vertically running border frame rods F1 are connected to two horizontally running border frame rods F2 at corner nodes N4 to form an outer rectangular contour of a space frame T. The space frame T defines a plane of extension of the structural panel S to be manufactured. In a second stage M2, a plurality of equidistantly spaced horizontally running space frame rods H are spanned between the two vertically running border frame rods F1. Similarly, in a third stage M3, a plurality of equidistantly spaced vertically running space frame rods V are spanned between the two horizontally running border frame rods F2. Finally, a plurality of diagonally running space frame rods D1 and D2 are spanned in a fourth stage M4 to run between diagonally neighboring interconnection nodes N3 of the horizontally running space frame rods H or the vertically running space frame rods V. Those diagonally running space frame rods D1 and D2 extend towards the connection nodes N1 and the corner nodes N4 at the vertically and horizontally running border frame rods F1 and F2, respectively.

The resulting structural panel S formed by the space frame structure as described above is a cheap, extremely light and flexible system that allows for rapid construction and deconstruction of multiple structures of varying outer profile. The structural panel S may for example be used to build up panels of a structural aircraft component, such as for example an aircraft cabin partition wall. The space frames building up the structural panels S as disclosed hereinforth may be used in a lot of applications, including - but not limited to - constructions of structural components in aircraft, interior design, bridge building, vehicle carriages, civil engineering, naval engineering, space flight, applications for children's toys and similar. A particular application pertains to the construction of structural panels in structural aircraft components. Such structural panels may include space frame rods for defining an overall outer shape of the structural aircraft components, for example within a component boundary predefined by a rigid outer carrier frame. Structural panels may reinforce the surfaces of core panels, specifically under compression and buckling loads.

In the foregoing detailed description, various features are grouped together in one or more examples or examples with the purpose of streamlining the disclosure. It is to be understood that the above description is intended to be illustrative, and not restrictive. It is intended to cover all alternatives and modifications, as long as they fall within the scope of the appended claims. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

The invention is limited by the scope of the appended claims.

### List of reference numerals and signs

- B: Rod wall
- C: Space frame cell
- d: Rod wall thickness
- D1: Diagonal space frame rods
- D2: Diagonal space frame rods
- H: Horizontal space frame rods
- F1: Vertical border frame rods
- F2: Horizontal border frame rods
- M: Method
- M1: Method stage
- M2: Method stage
- M3: Method stage
- M4: Method stage
- N1: Connection node
- N2: Intracell node
- N3: Interconnection node
- N4: Corner node
- S: Structural panel
- T: Space frame
- V: Vertical space frame rods

## Claims

1. Structural panel (S), comprising:
a space frame (T) having an outer rectangular contour, the space frame (T) comprising:
two vertically running border frame rods (F1);
two horizontally running border frame rods (F2) connecting to the two vertically running border frame rods (F1) at corner nodes (N4) of the outer rectangular contour;
a plurality of equidistantly spaced horizontally running space frame rods (H);
a plurality of equidistantly spaced vertically running space frame rods (V), the horizontally and vertically running space frame rods (H) each connecting to one of the two vertically running border frame rods (F1) and two horizontally running border frame rods (F2) at connection nodes (N1);
a plurality of diagonally running space frame rods (D1; D2) running between diagonally neighboring interconnection nodes (N3) of the horizontally running space frame rods (H) or the vertically running space frame rods (V) and extending towards the connection nodes (N1) and the corner nodes (N4) at the vertically and horizontally running border frame rods (F1; F2); and
intracell nodes (N2) forming intersections between the diagonally running space frame rods (D1; D2) and lying within space frame cells (C) defined by two adjacent horizontally running space frame rods (H) and two adjacent vertically
running space frame rods (V),
**characterized in that** the horizontally running space frame rods (H), the vertically running space frame rods (V), the vertically running border frame rods (F1), the horizontally running border frame rods (F2) and the diagonally running space frame rods (D1; D2) are each longitudinally extending beams with hollow cross-sections.

2. Structural panel (S) according to claim 1, wherein the horizontally running space frame rods (H) and the vertically running space frame rods (V) intersect at the interconnection nodes (N3).

3. Structural panel (S) according to claim 1 or 2, wherein the cross-sectional shape of the horizontally running space frame rods (H), the vertically running space frame rods (V), the vertically running border frame rods (F1), the horizontally running border frame rods (F2) and the diagonally running space frame rods (D1; D2) is quadratic or rectangular.

4. Structural panel (S) according to claim 1 or 2, wherein the cross-sectional shape of the horizontally running space frame rods (H), the vertically running space frame rods (V), the vertically running border frame rods (F1), the horizontally running border frame rods (F2) and the diagonally running space frame rods (D1; D2) is circular, oval, trapezoidal or triangular.

5. Structural panel (S) according to one of the claims 1 to 4, wherein the horizontally running space frame rods (H), the vertically running space frame rods (V), the vertically running border frame rods (F1), the horizontally running border frame rods (F2) and the diagonally running space frame rods (D1; D2) are torsion stiff frame rods having a torsional constant which is higher or equal to their area moment of inertia.

6. Structural panel (S) according to one of the claims 1 to 5, wherein the space frame (T) is configured to sustain out-of-plane loads.

7. Structural panel (S) according to one of the claims 1 to 6, wherein the ratio of the distance between each two adjacent horizontally running space frame rods (H) and the distance between each two adjacent vertically running space frame rods (V) is in the range between 5:4 and 4:5, in particular 1:1.

8. Structural aircraft component including a substantially planar structural panel (S) according to one of the claims 1 to 7.

9. Method (M) for manufacturing a structural panel (S), the method (M) comprising:
connecting (M1) two vertically running border frame rods (F1) to two horizontally running border frame rods (F2) at corner nodes (N4) to form an outer rectangular contour of a space frame (T);
spanning (M2) a plurality of equidistantly spaced horizontally running space frame rods (H) between the two vertically running border frame rods (F1);
spanning (M3) a plurality of equidistantly spaced vertically running space frame rods (V) between the two horizontally running border frame rods (F2);
spanning (M4) a plurality of diagonally running space frame rods (D1; D2) to run between diagonally neighboring interconnection nodes (N3) of the horizontally running space frame rods (H) or the vertically running space frame rods (V) and
extending towards the connection nodes (N1) and the corner nodes (N4) at the vertically and horizontally running border frame rods (F1; F2); and
forming (M5) intracell nodes (N2) as intersections between the diagonally running space frame rods (D1; D2), the intracell nodes (N2) lying within space frame cells (C) defined by two adjacent horizontally running space frame rods (H) and two adjacent vertically running space frame rods (V),
**characterized in that** the horizontally running space frame rods (H), the vertically running space frame rods (V), the vertically running border frame rods (F1), the horizontally running border frame rods (F2) and the diagonally running space frame rods (D1; D2) are each manufactured as longitudinally extending beams with hollow cross-sections.

10. Method (M) according to claim 9, wherein the horizontally running space frame rods (H), the vertically running space frame rods (V), the vertically running border frame rods (F1), the horizontally running border frame rods (F2) and the diagonally running space frame rods (D1; D2) of the space frame (T) are manufactured using an additive manufacturing process.

## Patentansprüche

1. Strukturplatte (S), umfassend:
ein Raumfachwerk (T) mit einer rechteckigen Außenkontur, wobei das Raumfachwerk (T) Folgendes umfasst:
zwei vertikal verlaufende Randfachwerkstäbe (F1),
zwei horizontal verlaufende Randfachwerkstäbe (F2), die die beiden vertikal verlaufenden Randfachwerkstäbe (F1) an Eckknotenpunkten (N4) der rechteckigen Außenkontur verbinden,
eine Vielzahl von gleichmäßig beabstandeten, horizontal verlaufenden Raumfachwerkstäben (H),
eine Vielzahl von gleichmäßig beabstandeten, vertikal verlaufenden Raumfachwerkstäben (V), wobei die horizontal und vertikal verlaufenden Raumfachwerkstäbe (H) an Verbindungsknotenpunkten (N1) jeweils mit einem der beiden vertikal verlaufenden Randfachwerkstäbe (F1) und zwei horizontal verlaufenden Randfachwerkstäben (F2) verbunden sind,
eine Vielzahl von diagonal verlaufenden Raumfachwerkstäben (D1; D2), die zwischen diagonal benachbarten Kopplungsknoten (N3) der horizontal verlaufenden Raumfachwerkstäben (H) oder den vertikal verlaufenden Raumfachwerkstäben (V) verlaufen und sich zu den Verbindungsknotenpunkten (N1) und den Eckknotenpunkten (N4) an den vertikal und horizontal verlaufenden Randfachwerkstäben (F1; F2) hin erstrecken, und
Intrazellularknoten (N2), die Kreuzungen zwischen den diagonal verlaufenden Raumfachwerkstäben (D1; D2) bilden und in von zwei benachbarten horizontal verlaufenden Raumfachwerkstäben (H) und zwei benachbarten vertikal verlaufenden Raumfachwerkstäben (V) definierten Raumfachwerkzellen (C) liegen,
**dadurch gekennzeichnet, dass** die horizontal verlaufenden Raumfachwerkstäbe (H), die vertikal verlaufenden Raumfachwerkstäbe (V), die vertikal verlaufenden Randfachwerkstäbe (F1), die horizontal verlaufenden Randfachwerkstäbe (F2) und die diagonal verlaufenden Raumfachwerkstäbe (D1; D2) jeweils sich in Längsrichtung erstreckende Balken mit hohlen Querschnitten sind.

2. Strukturplatte (S) nach Anspruch 1, wobei sich die horizontal verlaufenden Raumfachwerkstäbe (H) und die vertikal verlaufenden Raumfachwerkstäbe (V) an den Kopplungsknotenpunkte (N3) kreuzen.

3. Strukturplatte (S) nach Anspruch 1 oder 2, wobei die Querschnittsform der horizontal verlaufenden Raumfachwerkstäbe (H), der vertikal verlaufenden Raumfachwerkstäbe (V), der vertikal verlaufenden Randfachwerkstäbe (F1), der horizontal verlaufenden Randfachwerkstäbe (F2) und der diagonal verlaufenden Raumfachwerkstäbe (D1; D2) quadratisch oder rechteckig ist.

4. Strukturplatte (S) nach Anspruch 1 oder 2, wobei die Querschnittsform der horizontal verlaufenden Raumfachwerkstäbe (H), der vertikal verlaufenden Raumfachwerkstäbe (V), der vertikal verlaufenden Randfachwerkstäbe (F1), der horizontal verlaufenden Randfachwerkstäbe (F2) und der diagonal verlaufenden Raumfachwerkstäbe (D1; D2) kreisförmig, oval, trapezförmig oder dreieckig ist.

5. Strukturplatte (S) nach einem der Ansprüche 1 bis 4, wobei die horizontal verlaufenden Raumfachwerkstäbe (H), die vertikal verlaufenden Raumfachwerkstäbe (V), die vertikal verlaufenden Randfachwerkstäbe (F1), die horizontal verlaufenden Randfachwerkstäbe (F2) und die diagonal verlaufenden Raumfachwerkstäbe (D1; D2) torsionssteife Raumfachwerkstäbe mit einer Torsionskonstante sind, die größer oder gleich ihrem Flächenträgheitsmoment ist.

6. Strukturplatte (S) nach einem der Ansprüche 1 bis 5, wobei das Raumfachwerk (T) zum Aufnehmen von Out-of-Plane-Lasten ausgestaltet ist.

7. Strukturplatte (S) nach einem der Ansprüche 1 bis 6, wobei das Verhältnis des Abstands zwischen jeweils zwei benachbarten horizontal verlaufenden Raumfachwerkstäben (H) zu dem Abstand zwischen jeweils zwei benachbarten vertikal verlaufenden Raumfachwerkstäben (V) im Bereich zwischen 5:4 und 4:5, inbesondere 1:1, liegt.

8. Flugzeugstrukturbauteil, aufweisend eine im Wesentlichen planare Strukturplatte (S) nach einem der Ansprüche 1 bis 7.

9. Verfahren (M) zur Herstellung einer Strukturplatte (S), wobei das Verfahren (M) Folgendes umfasst:
Verbinden (M1) von zwei vertikal verlaufenden Randfachwerkstäben (F1) mit zwei horizontal verlaufenden Randfachwerkstäben (F2) an Eckknotenpunkten (N4), um eine rechteckige Außenkontur eines Raumfachwerks (T) zu bilden,
Aufspannen (M2) einer Vielzahl von gleichmäßig beabstandeten horizontal verlaufenden Raumfachwerkstäben (H) zwischen zwei vertikal verlaufenden Randfachwerkstäben (F1),
Aufspannen (M3) einer Vielzahl von gleichmäßig beabstandeten vertikal verlaufenden Raumfachwerkstäben (V) zwischen zwei horizontal verlaufenden Randfachwerkstäben (F2),
Aufspannen (M4) einer Vielzahl von diagonal verlaufenden Raumfachwerkstäben (D1; D2), so dass sie zwischen diagonal benachbarten Kopplungsknotenpunkten (N3) der horizontal verlaufenden Raumfachwerkstäbe (H) oder der vertikal verlaufenden Raumfachwerkstäbe (V) verlaufen und sich zu den Verbindungsknotenpunkten (N1) und den Eckknotenpunkten (N4) an den vertikal und horizontal verlaufenden Randfachwerkstäben (F1; F2) hin erstrecken, und
Bilden (M5) von Intrazellularknoten (N2) als Kreuzungen zwischen den diagonal verlaufenden Raumfachwerkstäben (D1; D2), wobei die Intrazellularknoten (N2) in von zwei benachbarten horizontal verlaufenden Raumfachwerkstäben (H) und zwei benachbarten vertikal verlaufenden Raumfachwerkstäben (V) definierten Raumfachwerkzellen (C) liegen,
**dadurch gekennzeichnet, dass** die horizontal verlaufenden Raumfachwerkstäbe (H), die vertikal verlaufenden Raumfachwerkstäbe (V), die vertikal verlaufenden Randfachwerkstäbe (F1), die horizontal verlaufenden Randfachwerkstäbe (F2) und die diagonal verlaufenden Raumfachwerkstäbe (D1; D2) jeweils als sich in Längsrichtung erstreckende Balken mit hohlen Querschnitten hergestellt werden.

10. Verfahren (M) nach Anspruch 9, wobei die horizontal verlaufenden Raumfachwerkstäbe (H), die vertikal verlaufenden Raumfachwerkstäbe (V), die vertikal verlaufenden Randfachwerkstäbe (F1), die horizontal verlaufenden Randfachwerkstäbe (F2) und die diagonal verlaufenden Raumfachwerkstäbe (D1; D2) des Raumfachwerks (T) unter Verwendung eines additiven Herstellungsverfahrens hergestellt werden.

## Revendications

1. Panneau structurel (S), comprenant :
un cadre d'espace (T) ayant un contour rectangulaire extérieur, le cadre d'espace (T) comprenant :
deux barres de cadre de bordure se déployant verticalement (F1) ;
deux barres de cadre de bordure se déployant horizontalement (F2) se raccordant aux deux barres de cadre de bordure se déployant verticalement (F1) au niveau de nœuds de coin (N4) du contour rectangulaire extérieur ;
une pluralité de barres de cadre d'espace se déployant horizontalement espacées de façon équidistante (H) ;
une pluralité de barres de cadre d'espace se déployant verticalement espacées de façon équidistante (V), les barres de cadre d'espace se déployant horizontalement et verticalement (H) se raccordant chacune à une des deux barres de cadre de bordure se déployant verticalement (F1) et des deux barres de cadre de bordure se déployant horizontalement (F2) à des nœuds de raccordement (N1) ;
une pluralité de barres de cadre d'espace se déployant diagonalement (D1 ; D2) se déployant entre des nœuds d'inter-raccordement diagonalement voisins (N3) des barres de cadre d'espace se déployant horizontalement (H) ou des barres de cadre d'espace se déployant verticalement (V) et s'étendant vers les nœuds de raccordement (N1) et les nœuds de coin (N4) au niveau des barres de cadre de bordure se déployant verticalement et horizontalement (F1 ; F2) ; et
des nœuds intracellulaires (N2) formant des intersections entre les barres de cadre d'espace se déployant diagonalement (D1 ; D2) et se trouvant à l'intérieur de cellules de cadre d'espace (C) définies par deux barres de cadre d'espace se déployant horizontalement adjacentes (H) et deux barres de cadre d'espace se déployant verticalement adjacentes (V),
**caractérisé en ce que** les barres de cadre d'espace se déployant horizontalement (H), les barres de cadre d'espace se déployant verticalement (V), les barres de cadre de bordure se déployant verticalement (F1), les barres de cadre de bordure se déployant horizontalement (F2) et les barres de cadre d'espace se déployant diagonalement (D1 ; D2) sont chacune des poutres s'étendant longitudinalement avec des sections transversales creuses.

2. Panneau structurel (S) selon la revendication 1, dans lequel les barres de cadre d'espace se déployant horizontalement (H) et les barres de cadre d'espace se déployant verticalement (V) s'intersectent au niveau des nœuds d'inter-raccordement (N3).

3. Panneau structurel (S) selon la revendication 1 ou 2, dans lequel la forme de section transversale des barres de cadre d'espace se déployant horizontalement (H), des barres de cadre d'espace se déployant verticalement (V), des barres de cadre de bordure se déployant verticalement (F1), des barres de cadre de bordure se déployant horizontalement (F2) et des barres de cadre d'espace se déployant diagonalement (D1 ; D2) est quadratique ou rectangulaire.

4. Panneau structurel (S) selon la revendication 1 ou 2, dans lequel la forme de section transversale des barres de cadre d'espace se déployant horizontalement (H), des barres de cadre d'espace se déployant verticalement (V), des barres de cadre de bordure se déployant verticalement (F1), des barres de cadre de bordure se déployant horizontalement (F2) et des barres de cadre d'espace se déployant diagonalement (D1 ; D2) est circulaire, ovale, trapézoïdale ou triangulaire.

5. Panneau structurel (S) selon l'une des revendications 1 à 4, dans lequel les barres de cadre d'espace se déployant horizontalement (H), les barres de cadre d'espace se déployant verticalement (V), les barres de cadre de bordure se déployant verticalement (F1), les barres de cadre de bordure se déployant horizontalement (F2) et les barres de cadre d'espace se déployant diagonalement (D1 ; D2) sont des barres de cadre résistantes à la torsion ayant une constante de torsion qui est supérieure ou égale à leur moment d'inertie surfacique.

6. Panneau structurel (S) selon l'une des revendications 1 à 5, dans lequel le cadre d'espace (T) est configuré pour supporter des charges hors plan.

7. Panneau structurel (S) selon l'une des revendications 1 à 6, dans lequel le rapport de la distance entre chaque paire de barres de cadre d'espace se déployant horizontalement adjacentes (H) et de la distance entre chaque paire de barres de cadre d'espace se déployant verticalement adjacentes (V) est dans la plage entre 5 : 4 et 4 : 5, en particulier 1 : 1.

8. Composant d'aéronef structurel, incluant un panneau structurel sensiblement plan (S) selon l'une des revendications 1 à 7.

9. Procédé (M) pour fabriquer un panneau structurel (S), le procédé (M) comprenant :
le raccordement (M1) de deux barres de cadre de bordure se déployant verticalement (F1) à deux barres de cadre de bordure se déployant horizontalement (F2) au niveau de nœuds de coin (N4) pour former un contour rectangulaire extérieur d'un cadre d'espace (T) ;
le déploiement (M2) d'une pluralité de barres de cadre d'espace se déployant horizontalement espacées de façon équidistante (H) entre les deux barres de cadre de bordure se déployant verticalement (F1) ;
le déploiement (M3) d'une pluralité de barres de cadre d'espace se déployant verticalement espacées de façon équidistante (V) entre les deux barres de cadre de bordure se déployant horizontalement (F2) ;
le déploiement (M4) d'une pluralité de barres de cadre d'espace se déployant diagonalement (D1 ; D2) pour s'étendre entre des nœuds d'inter-raccordement diagonalement voisins (N3) des barres de cadre d'espace se déployant horizontalement (H) ou des barres de cadre d'espace se déployant verticalement (V) et s'étendant vers les nœuds de raccordement (N1) et les nœuds de coin (N4) au niveau des barres de cadre de bordure se déployant verticalement et horizontalement (F1 ; F2) ; et
la formation (M5) de nœuds intracellulaires (N2) en tant qu'intersections entre les barres de cadre d'espace se déployant diagonalement (D1 ; D2), les nœuds intracellulaires (N2) se trouvant à l'intérieur de cellules de cadre d'espace (C) définies par deux barres de cadre d'espace se déployant horizontalement adjacentes (H) et deux barres de cadre d'espace se déployant verticalement adjacentes (V),
**caractérisé en ce que** les barres de cadre d'espace se déployant horizontalement (H), les barres de cadre d'espace se déployant verticalement (V), les barres de cadre de bordure se déployant verticalement (F1), les barres de cadre de bordure se déployant horizontalement (F2) et les barres de cadre d'espace se déployant diagonalement (D1 ; D2) sont chacune fabriquées sous forme de poutres s'étendant longitudinalement avec des sections transversales creuses.

10. Procédé (M) selon la revendication 9, dans lequel les barres de cadre d'espace se déployant horizontalement (H), les barres de cadre d'espace se déployant verticalement (V), les barres de cadre de bordure se déployant verticalement (F1), les barres de cadre de bordure se déployant horizontalement (F2) et les barres de cadre d'espace se déployant diagonalement (D1 ; D2) du cadre d'espace (T) sont fabriquées en utilisant un processus de fabrication additive.
